(19) Europäisches Patentamt
European Patent Office
Office européen des brevets

(11) **EP 2 467 712 B1**

(12) **EUROPÄISCHE PATENTSCHRIFT**

(45) Veröffentlichungstag und Bekanntmachung des Hinweises auf die Patenterteilung:
**27.09.2017   Patentblatt 2017/39**

(21) Anmeldenummer: **10742478.0**

(22) Anmeldetag: **06.08.2010**

(51) Int Cl.:
***G01N 30/86*** *(2006.01)*

(86) Internationale Anmeldenummer:
**PCT/EP2010/061510**

(87) Internationale Veröffentlichungsnummer:
**WO 2011/020722 (24.02.2011 Gazette 2011/08)**

(54) **VERFAHREN ZUR VERBESSERUNG DER CHROMATOGRAPHISCHEN NACHWEISGRENZE FÜR EINEN ANALYTEN**

PROCESS FOR THE IMPROVEMENT OF THE CHROMATOGRAPHIC DETECTION LIMIT OF AN ANALYTE

MÉTHODE POUR L'AMÉLIORATION D'UN LIMITE DE DETECTION CHROMATOGRAPHIQUE D'UN ANALYTE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **19.08.2009   DE 102009038112**

(43) Veröffentlichungstag der Anmeldung:
**27.06.2012   Patentblatt 2012/26**

(73) Patentinhaber: **Siemens Aktiengesellschaft 80333 München (DE)**

(72) Erfinder: **GELLERT, Udo 76756 Bellheim (DE)**

(56) Entgegenhaltungen:
**WO-A1-93/21592     GB-A- 2 329 475**

• **GAN F ET AL: "Baseline correction by improved iterative polynomial fitting with automatic threshold" CHEMOMETRICS AND INTELLIGENT LABORATORY SYSTEMS, Bd. 82, Nr. 1-2, 26. Mai 2006 (2006-05-26), Seiten 59-65, XP024894964 ELSEVIER SCIENCE PUBLISHERS B.V. AMSTERDAM, NL ISSN: 0169-7439 DOI: 10.1016/J.CHEMOLAB.2005.08.009 [gefunden am 2006-05-26]**
• **RASO M A ET AL: "A general fitting program for resolution of complex profiles. II. Automatic baseline correction" COMPUTERS & CHEMISTRY UK, Bd. 15, Nr. 1, 1991, Seiten 29-35, XP002609779 ISSN: 0097-8485**
• **DAVID A. MCNULTY,HALLIDAY J.H.MACFIE: "THE EFFECT OF DIFFERENT BASELINE ESTIMATORS ON THE LIMIT OF QUANTIFICATION IN CHROMATOGRAPHY" JOURNAL OF CHEMOMETRICS, Bd. 11, 1997, Seiten 1-11, XP002609780**

**Beschreibung**

Die Erfindung betrifft ein Verfahren zur Verbesserung der chromatographischen Nachweisgrenze für einen Analyten.

In der Chromatographie wird eine Probe eines zu analysierenden Stoffgemischs durch eine chromatographische Trenneinrichtung geleitet. Aufgrund unterschiedlicher Wanderungsgeschwindigkeiten durch die Trenneinrichtung erreichen die Analyten, also die einzelnen Stoffe des Stoffgemischs, den Ausgang der Trenneinrichtung zu unterschiedlichen Zeitpunkten und werden dort nacheinander mittels eines geeigneten Detektors detektiert. Der Detektor erzeugt als Messsignal ein Chromatogramm, das aus einer Basislinie und einer den getrennten Stoffen entsprechenden Anzahl von Peaks besteht. In der Praxis ist das Chromatogramm verrauscht, wobei die einzelnen Peaks mehr oder weniger deutlich aus dem Signalrauschen herausragen. Das Rauschen entspricht der Differenz zwischen dem größten und kleinsten Messwert in einem betrachteten peakfreien Abschnitt des Chromatogramms, z. B. den beiden Teilabschnitten vor und hinter dem interessierenden Peak. Das Rauschen kann z. B. auch als die n-fache Standardabweichung der Messwerte von ihrem Mittelwert definiert werden. Die Nachweisgrenze eines Analyten wird als das k-fache, z. B 2-fache Rauschen der Basislinie definiert; d. h. die von der rauschfreien Basislinie, also vom Mittelwert des Rauschens aus gemessene Peakhöhe muss mindestens das k-fache des Rauschens betragen. Bei gut aufgelösten Peaks ist die Peakfläche über der rauschfreien Basislinie zur Konzentration des Analyten proportional, wobei die Peakfläche im Gegensatz zur Peakhöhe auch bei unsymmetrischen Peaks genaue Ergebnisse liefert.

Die Höhe der Nachweisgrenze für einen Analyten ist also von der Genauigkeit abhängig, mit der die rauschfreie Basislinie im Bereich des Peaks des Analyten ermittelt werden kann.

Aus der GB 2 329 475 A ist ein Verfahren zur Verbesserung der chromatographischen Nachweisgrenze für einen Analyten bekannt, bei dem die Fläche der Peaks in einem Chromatogramm über einer durch Approximation ermittelten rauschfreien Basislinie bestimmt werden. Die Approximation erfolgt iterativ durch Glätten des Chromatogramms in den Bereichen, in denen es nach Subtraktion der Basislinie innerhalb eines Rauschbandes liegt. Dadurch werden die Bereiche der Peaks und somit die Peaks von der Approximation ausgespart.

Aus Gan F. et al.: "Baseline correction by improved iterative polynomial fitting with automatic threshold", Chemometrics and Intelligent Laboratory Systems, Bd. 82, Nr. 1-2, 26. Mai 2006, Seiten 59-65, ist es bekannt, die rauschfreie Basislinie durch iteratives polynomiales Fitting zu schätzen, wobei bei jedem Iterationsschritt in dem Verlauf des Chromatogramms die Peaks überall dort gekappt werden, wo sie die in dem jeweils vorangegangenen Iterationsschritt geschätzte Basislinie überschreiten. Auch hier findet keine Schätzung der Peaks statt.

Bei einem aus der WO 93/21592 A1 bekannten Verfahren wird eine geschätzte Basislinie von einem einen Peak enthaltenden Chromatogramm subtrahiert. Durch Glätten des basislinienfreien Chromatogramms erhält man den Peak. Dieser wird dann von dem ursprünglichen Chromatogramm subtrahiert. Von diesem peakfreien Chromatogramm wird das Rauschen subtrahiert, so dass man schließlich die Basislinie erhält. Das bekannte Verfahren ist nicht iterativ, und es ist auch nicht vorgesehen, die Peaks zu schätzen.

Raso M. A. et al.: "A general fitting program for resolution of complex profiles. II. Automatic baseline correction", Computers & Chemistry, Bd.15, Nr.1, 1991, Seiten 29-35, beschreibt eine Fittingfunktion, die aus einer Polynomfunktion für die Basislinie und beispielsweise einer Gauss-Funktion für den Peak zusammengesetzt ist. Das Fitting erfolgt iterativ nach der Methode der kleinsten Fehlerquadrate zwischen der Fittingfunktion und einem Versuchsprofil. Dieses wird zur Sicherstellung der Konvergenz nach jeder Iteration modifiziert, indem die erhaltene Polynomfunktion für die Basislinie von dem Versuchsprofil subtrahiert wird. Für die folgende Iteration müssen die Parameter der Basislinie zurückgesetzt werden. Am Ende des Iterationsprozesses kann die Basislinie aus der Differenz zwischen dem ursprünglichen Versuchsprofil und dem finalen modifizierten Versuchsprofil ermittelt werden.

Der Erfindung liegt die Aufgabe zugrunde, die Ermittlung der rauschfreien Basislinie und damit die Höhe der Nachweisgrenze zu verbessern.

Gemäß der Erfindung wird die Aufgabe durch das in dem Patentanspruch definierte Verfahren mit folgenden Schritten gelöst:

a) Erstellung eines Chromatogramms mit einem Peak des Analyten,

b) Berechnen einer Regressionsgeraden für die Basislinie aus Messwerten eines peakfreien Abschnitts des Chromatogramms,

c) Berechnen einer aus der Gauss-Funktion und der Regressionsgeraden bestehenden Regressionsfunktion aus Messwerten des Peaks,

d) Subtrahieren der Regressionsfunktion von dem Chromatogramm,

e) Berechnen eines Regressionspolynoms für die Basislinie aus den Werten des in Schritt d) veränderten Chromatogramms,

f) Berechnen einer aus der Gauss-Funktion und dem Regressionspolynom bestehenden weiteren Regressionsfunktion aus den Messwerten des Peaks in dem ursprünglichen Chromatogramm,

g) Berechnen der Peakfläche zwischen dem Regressionspolynom und der weiteren Regressionsfunktion,

h) Wiederholen des Schrittes d) mit der weiteren Regressionsfunktion anstelle der Regressionsfunktion und der Schritte e), f) und g), bis sich die berechnete Peakfläche um weniger als ein vorgegebenes Maß ändert.

Das erfindungsgemäße iterative Verfahren konvergiert sehr schnell und liefert eine sehr genaue Schätzung der rauschfreien Basislinie im Bereich des interessierenden Peaks.

Zur weiteren Erläuterung der Erfindung wird im Folgenden auf die Figuren der Zeichnung Bezug genommen, im Einzelnen zeigen:

Figur 1          ein Beispiel eines Chromatogramms mit Peak und die

Figuren 2 bis 4   Beispiele für die Approximation des Chromatogramms zur Ermittlung der rauschfreien Basislinie.

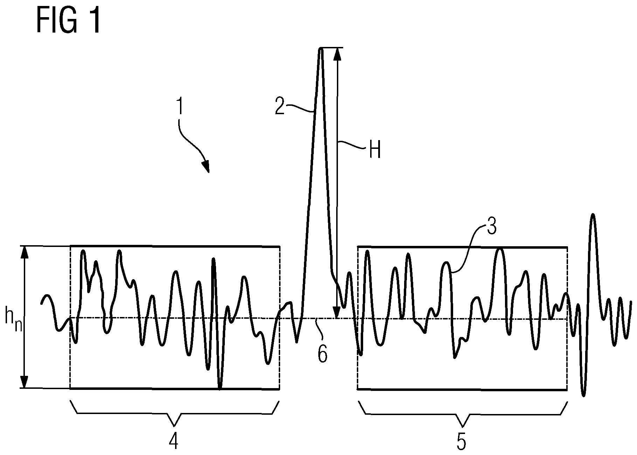

Figur 1 zeigt ein Chromatogramm 1 im Bereich des Peaks 2 eines interessierenden Analyten. Die Basislinie (Nulllinie) 3 des Chromatogramms 1 ist stark verrauscht. Zur Bestimmung des Rauschens wird ein peakfreier Abschnitt des Chromatogramms 1 in der Nähe des Peaks 2, hier z. B. zwei Teilabschnitte 4 und 5 vor und hinter dem interessierenden Peak 2, betrachtet und die maximale Schwankung $h_n$ der Basislinie 3 in den beiden Teilabschnitten 4 und 5 ermittelt. Die rauschfreie Basislinie 6 ergibt sich in erster Näherung aus dem Mittelwert des Rauschens $h_n$. Die Peakhöhe H wird von der rauschfreien Basislinie 6 ermittelt, wobei als Nachweisgrenze des Analyten eine Peakhöhe H definiert wird, die dem k-fachen, z. B 2-fachen, des Rauschens $h_n$ entspricht. Zur Bestimmung der Konzentration des Analyten wird schließlich die Peakfläche über der rauschfreien Basislinie 6 berechnet.

Der Faktor k für die Nachweisgrenze ergibt sich aus der Unsicherheit bei der Ermittlung der rauschfreien Basislinie 6 im Bereich des Peaks 2. Je genauer die rauschfreie Basislinie 6 ermittelt werden kann, umso kleiner kann der Faktor k gewählt werden und umso niedriger ist die Nachweisgrenze für den Analyten.

Im Folgenden wird anhand eines Beispiels erläutert, wie entsprechend dem erfindungsgemäßen Verfahren die Ermittlung der Basislinie im Bereich des Peaks 2 verbessert wird.

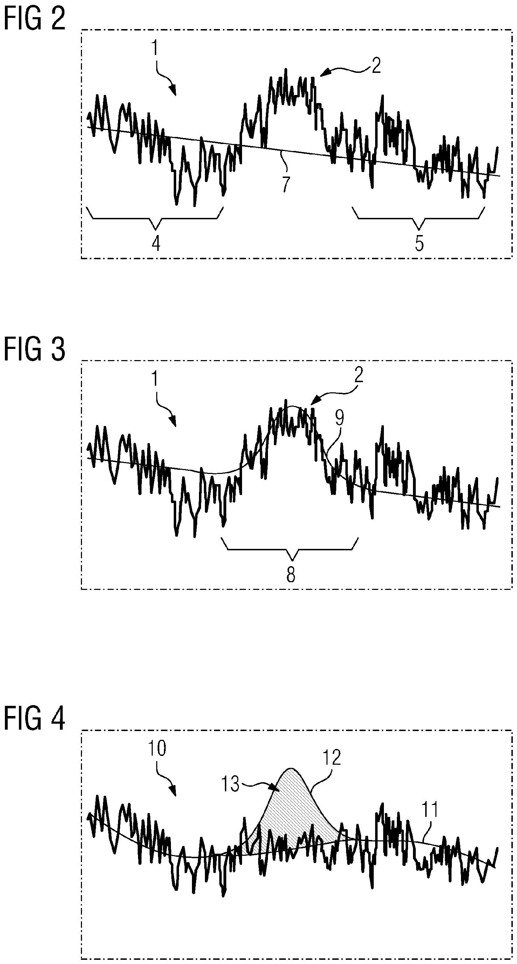

In einem ersten Schritt a) wird das Chromatogramm 1 mit dem Peak 2 des interessierenden Analyten erstellt. Figur 2 zeigt das Chromatogramm 1, aus dessen Rauschen der Peak 2 mehr oder weniger herausragt.

In einem Schritt b) wird aus Messwerten der beiden Teilabschnitte 4 und 5 des Chromatogramms 1 vor und hinter dem interessierenden Peak 2 eine Regressionsgerade 7 (y = ax+b) für die rauschfreie Basislinie 6 berechnet.

Wie Figur 3 zeigt, wird in einem Schritt c) aus den Messwerten des Chromatogramms 1 im Bereich 8 des Peaks 2 eine Regressionsfunktion 9 berechnet, wobei die Regressionsfunktion 9 aus der Gauss-Funktion und der Regressionsgeraden 7 besteht. Die Regressionsfunktion 9 lautet also:

$$y = c \cdot \exp - ((x-d)/e)^2 + ax+b.$$

In einem Schritt d) wird die Regressionsfunktion 9 von dem Chromatogramm 1 subtrahiert, so dass das in Figur 4 gezeigte veränderte Chromatogramm 10 ohne den Peak erhalten wird.

In einem Schritt e) wird aus den Werten des in Schritt d) veränderten Chromatogramms 10 ein Regressionspolynom 11 (z. B. $y = fx^3+gx^2+hx+i$) für die Basislinie berechnet.

In einem Schritt f) wird aus den Messwerten des ursprünglichen Chromatogramms 1 im Bereich 8 des Peaks 2 eine weitere Regressionsfunktion 12 berechnet, wobei die weitere Regressionsfunktion 12 aus der oben genannten Gauss-Funktion und dem Regressionspolynom 11 besteht. Die weitere Regressionsfunktion 12 lautet also: $y = c \cdot \exp-((x-d)/e)^2 + fx^3+gx^2+hx+i$.

In einem Schritt f) wird die Peakfläche 13 zwischen dem Regressionspolynom 11 und der weiteren Regressionsfunktion 12 berechnet.

Anschließend werden der Schritt d) mit der weiteren Regressionsfunktion 12 anstelle der Regressionsfunktion 9 sowie die Schritte e), f) und g) so oft wiederholt, bis sich die berechnete Peakfläche 13 um weniger als ein vorgegebenes Maß ändert. Das zuletzt erhaltene Regressionspolynom 11 approximiert die rauschfreie Basislinie 6 mit hoher Genauigkeit.

## Patentansprüche

1.   Verfahren zur Verbesserung der chromatographischen Nachweisgrenze für einen Analyten mit folgenden Schritten:

   a) Erstellung eines Chromatogramms (1) mit einem Peak (2) des Analyten,
   b) Berechnen einer Regressionsgeraden (7) für die Basislinie aus Messwerten eines peakfreien Abschnitts (4, 5) des Chromatogramms (1),
   c) Berechnen einer aus einer Gauss-Funktion und der Regressionsgeraden (7) bestehenden Regressionsfunktion (9) aus Messwerten des Peaks (2),
   d) Subtrahieren der Regressionsfunktion (9) von dem Chromatogramm (1),
   e) Berechnen eines Regressionspolynoms (11) für die Basislinie aus den Werten des in Schritt d) veränderten Chromatogramms (10),
   f) Berechnen einer aus der Gauss-Funktion aus Schritt c) und dem Regressionspolynom (11) bestehenden weiteren Regressionsfunktion (12) aus den Messwerten des Peaks (2) in dem ursprünglichen Chromatogramm (1),

g) Berechnen der Peakfläche (13) zwischen dem Regressionspolynom (11) und der weiteren Regressionsfunktion (12),

h) Wiederholen des Schrittes d) mit der weiteren Regressionsfunktion (12) anstelle der Regressionsfunktion (9) und der Schritte e), f) und g), bis sich die berechnete Peakfläche (13) um weniger als ein vorgegebenes Maß ändert.

**Claims**

1. Method for improving the chromatographic detection limit for an analyte, comprising the following steps:

   a) producing a chromatogram (1) with a peak (2) of the analyte,

   b) calculating a regression line (7) for the baseline from measured values of a section (4, 5) in the chromatogram (1) without a peak,

   c) calculating a regression function (9), consisting of a Gaussian function and the regression line (7), from measured values of the peak (2),

   d) subtracting the regression function (9) from the chromatogram (1),

   e) calculating a regression polynomial (11) for the baseline from the values of the chromatogram (10) modified in step d),

   f) calculating a further regression function (12), consisting of the Gaussian function from step c) and the regression polynomial (11), from the measured values of the peak (2) in the original chromatogram (1),

   g) calculating the peak area (13) between the regression polynomial (11) and the further regression function (12),

   h) repeating step d), with the further regression function (12) in place of the regression function (9), and steps e), f) and g) until the calculated peak area (13) changes by less than a predetermined amount.

**Revendications**

1. Procédé d'amélioration de la limite de détection chromatographique pour un analyte comprenant les stades suivants :

   a) production d'un chromatogramme (1) ayant une crête (2) de l'analyte,

   b) calcul d'une droite (7) de régression pour la ligne de base, à partir de valeurs de mesure d'un segment (4, 5) sans crête du chromatogramme (1),

   c) calcul à partir des valeurs de mesure de la crête (2) d'une fonction (9) de régression, constituée d'une fonction de Gaus et d'une droite (7) de régression,

   d) soustraction de la fonction (9) de régression du chromatogramme (1),

   e) calcul d'un polynôme de régression pour la ligne de base, à partir des valeurs du chromatogramme (10) modifiées au stade d),

   f) calcul, à partir des valeurs de mesure de la crête (2) dans le chromatogramme (1) d'origine, d'une autre fonction (12) de régression, constituée de la fonction de Gaus du stade c) et du polynôme (11) de régression,

   g) calcul de la surface (13) sous la crête entre le polynôme (11) de régression et l'autre fonction (12) de régression,

   h) répétition du stade d) avec l'autre fonction (12) de régression, au lieu de la fonction (9) de régression, et des stades e), f) et g), jusqu'à ce que la surface (13) sous la crête calculée se modifie de moins qu'une valeur donnée à l'avance.

FIG 1

FIG 2

FIG 3

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2329475 A

- WO 9321592 A1

**In der Beschreibung aufgeführte Nicht-Patentliteratur**

- **GAN F. et al.** Baseline correction by improved iterative polynomial fitting with automatic threshold. *Chemometrics and Intelligent Laboratory Systems,* 26. Mai 2006, vol. 82 (1-2), 59-65

- **RASO M. A. et al.** A general fitting program for resolution of complex profiles. II. Automatic baseline correction. *Computers & Chemistry,* 1991, vol. 15 (1), 29-35